# EUROPEAN PATENT APPLICATION

(11) **EP 2 194 373 A1**
(43) Date of publication of application: **09.06.2010**
(21) Application number: 08830267.4
(22) Date of filing: 09.09.2008
(51) Int. Cl.: G01N 23/04

(54) **X-RAY INSPECTION SYSTEM**

(30) Priority: 11.09.2007 JP 2007235717
(71) Applicant: Ishida Co., Ltd., Sakyo-ku Kyoto-shi Kyoto 606-8392 (JP)
(72) Inventor: MAKINO, Shinya, Ritto-shi Shiga 520-3026 (JP); IZUMI, Asashirou, Ritto-shi Shiga 520-3026 (JP)
(74) Representative: Kastel, Stefan
(86) International application number: PCT/JP2008/066235
(87) International publication number: WO 2009/034968

(57) **Abstract**

An object of the present invention is to provide a technology capable of improving durability of an X-ray shielding curtain used in an X-ray inspection apparatus. In order to achieve this object, an X-ray inspection apparatus (1) includes: a conveyor (22) which carries an object (3) carried in from a carry-in port (2a) to a carry-out port (2b); an X-ray irradiating part (24) which irradiates the object (3) carried by the conveyor (22) with X-rays (26); a line sensor (25) which detects the X-rays (26) from the X-ray irradiating part (24) which have passed through the object (3); and X-ray shielding curtains (23) provided in the carry-in port (2a) and the carry-out port (2b). The X-ray shielding curtain (23) includes a tungsten-containing layer.

## Description

### Technical Field

The present invention relates to an X-ray inspection apparatus that irradiates an object with X-rays to inspect the object.

### Background Art

Conventionally, various technologies related to an X-ray inspection apparatus have been proposed. For example, Patent Document 1 discloses the technology of preventing X-rays from leaking from a lateral side of the apparatus to an outside thereof. In addition, Patent Document 2 discloses the technology capable of reducing a burden on an operator when a door is opened/closed and also facilitating the maintenance of an excellent sanitary condition.

Patent Document 3 discloses the technology related to a radiation shielding material.

Patent Document 1: Japanese Patent Application Laid-Open No. 2003-83913
Patent Document 2: Japanese Patent Application Laid-Open No. 2004-333275
Patent Document 3: Japanese Patent Publication No. 3557864

As described in Patent Document 1, in some cases, the X-ray inspection apparatus includes X-ray shielding curtains provided in a carry-in port and a carry-out port of an object to be inspected for preventing X-rays from leaking to an outside of the apparatus. In this case, the object passes through the carry-in port or carry-out port while pushing the X-ray shielding curtains aside. In a case where a plurality of objects are inspected successively, the objects frequently come into contact with the X-ray shielding curtains, and thus the X-ray shielding curtain is required to have excellent durability.

### Disclosure of Invention

The present invention has been made in view of the above, and an object thereof is to provide a technology capable of improving durability of an X-ray shielding curtain used in an X-ray inspection apparatus.

In order to solve the above-mentioned problem, according to a first aspect of the present invention, an X-ray inspection apparatus includes: a carrying part carrying an object carried in from a carry-in port to a carry-out port; an X-ray irradiating part irradiating the object carried by the carrying part with X-rays; an X-ray detection part detecting the X-rays from the X-ray irradiating part which have passed through the object; and an X-ray shielding curtain provided in at least one of the carry-in port and the carry-out port, wherein the X-ray shielding curtain includes a tungsten-containing layer.

Further, according to a second aspect of the X-ray inspection apparatus of the present invention, in the first aspect, the X-ray shielding curtain includes a protective layer laminated on the tungsten-containing layer and formed of a polyolefin resin.

Further, according to a third aspect of the X-ray inspection apparatus of the present invention, in the second aspect, the protective layers are laminated on both surfaces of the tungsten-containing layer.

Further, according to a fourth aspect of the X-ray inspection apparatus of the present invention, in the first aspect, the X-ray shielding curtain includes protective layers laminated on both surfaces of the tungsten-containing layer and having elasticity higher than that of the tungsten-containing layer.

Further, according to a fifth aspect of the X-ray inspection apparatus of the present invention, in any one of the first to fourth aspects, a content rate of tungsten in the tungsten-containing layer is set to 70wt% or more and 80wt% or less.

Further, according to a sixth aspect of the X-ray inspection apparatus of the present invention, in any one of the first to fifth aspects, a thickness of the tungsten-containing layer is set to 0.3 mm or more and less than 1.0 mm.

Further, according to a seventh aspect of the X-ray inspection apparatus of the present invention, in any one of the first to sixth aspects: the X-ray shielding curtain is provided with a plurality of slits at predetermined intervals so that a plurality of strip parts are hung in a short split curtain shape; and the predetermined intervals are set to 10 mm or more and 20 mm or less.

Further, according to an eighth aspect of the X-ray inspection apparatus of the present invention, in any one of the first to sixth aspects: the X-ray shielding curtain is provided with a plurality of slits at predetermined intervals so that a plurality of strip parts are hung in a short split curtain shape; and a length of each of the plurality of strip parts is set to 100 mm or more and 320 mm or less.

Further, according to a ninth aspect of the X-ray inspection apparatus of the present invention, in any one of the first to eighth aspects, a color of the X-ray shielding curtain is set to blue.

Further, according to a tenth aspect of the X-ray inspection apparatus of the present invention, in any one of the second and third aspects, a thickness of the protective layer is set to 0.08 mm or more and 0.1 mm or less.

Further, according to an eleventh aspect of the present invention, in the first aspect, the X-ray inspection apparatus further includes: a suspension member by which the X-ray shielding curtain is suspended; and an attachment member attached to an upper end part of the X-ray shielding curtain and including an insertion space into which the suspension member is inserted, wherein: the attachment member is formed of a material through which X-rays pass; and an upper end of the tungsten-containing layer enters into an inside of the insertion space.

Further, according to a twelfth aspect of the X-ray inspection apparatus of the present invention, in the eleventh aspect, the upper end of the tungsten-containing layer is not in contact with the suspension member.

Further, according to a thirteenth aspect of the X-ray inspection apparatus of the present invention, in the first aspect, the X-ray inspection apparatus further includes: a suspension member by which the X-ray shielding curtain is suspended; and an attachment member attached to an upper end part of the X-ray shielding curtain and including an insertion space into which the suspension member is inserted, wherein the attachment member is formed of a metal material shielding X-rays.

Further, according to a fourteenth aspect of the X-ray inspection apparatus of the present invention, in the thirteenth aspect, a lower end part of the attachment member include a curved surface to be convex toward the upper end part of the X-ray shielding curtain, the curved surface being opposed to the upper end part and becoming apart from the upper end part as closer to a tip of the lower end part.

Further, according to a fifteenth aspect of the X-ray inspection apparatus of the present invention, in the thirteenth aspect, the attachment member includes a sandwiching portion sandwiching the upper end part of the X-ray shielding curtain by surface contact.

Further, according to a sixteenth aspect of the X-ray inspection apparatus of the present invention, in the fifteenth aspect, the attachment member and the upper end part of the X-ray shielding curtain are fastened to each other with a bolt at a position above the sandwiching portion.

According to the first to sixteenth aspects of the X-ray inspection apparatus of the present invention, the X-ray shielding curtain includes the tungsten-containing layer, whereby it is possible to enhance flexibility of the X-ray shielding curtain with which the object comes into contact and improve durability thereof while maintaining a function of shielding X-rays of the X-ray shielding curtain.

In particular, according to the second aspect, the protective layer formed of a polyolefin resin is laminated on the tungsten-containing layer in the X-ray shielding curtain, whereby it is possible to absorb the impact of the object on the X-ray shielding curtain by the protective layer. Further, it is possible to improve flexibility of the X-ray shielding curtain, and the protective layer becomes difficult to be peeled off from the tungsten-containing layer. As a result, durability of the X-ray shielding curtain is further improved.

In particular, according to the third aspect, the protective layers are laminated on both surfaces of the tungsten-containing layer, and hence it is possible to suppress the X-ray shielding curtain from deforming due to a difference in expansion coefficient between the tungsten-containing layer and the protective layer. In addition, there is no need to change an orientation of the X-ray shielding curtain even in a case where a carrying direction of the object is changed.

In particular, according to the fourth aspect, the protective layer having elasticity higher than that of the tungsten-containing layer is laminated on the tungsten-containing layer in the X-ray shielding curtain, whereby it is possible to absorb the impact of the object on the X-ray shielding curtain by the protective layer. As a result, durability of the X-ray shielding curtain can be further improved. Moreover, the protective layers are laminated on both surfaces of the tungsten-containing layer, whereby it is possible to suppress the X-ray shielding curtain from deforming due to a difference in expansion coefficient between the tungsten-containing layer and the protective layer. In addition, there is no need to change an orientation of the X-ray shielding curtain even in a case where the carrying direction of the object is changed.

In particular, according to the fifth aspect, the concentration rate of tungsten is set to 70wt% or more and 80wt% or less in the tungsten-containing layer of the X-ray shielding curtain, whereby it is possible to further improve flexibility of the X-ray shielding curtain and improve durability thereof while maintaining the function of shielding X-rays of the X-ray shielding curtain.

In particular, according to the sixth aspect, the thickness of the tungsten-containing layer of the X-ray shielding curtain is set to 0.3 mm or more and less than 1.0 mm, whereby it is possible to further improve flexibility of the X-ray shielding curtain and improve durability thereof while maintaining the function of shielding X-rays of the X-ray shielding curtain.

In particular, according to the seventh aspect, the X-ray shielding curtain is provided with a plurality of slits forming a plurality of strip parts hung in a short split curtain shape at intervals of 10 mm or more and 20 mm or less, whereby it is possible to suppress the plurality of strip parts from tangling with each other while reducing a portion of the X-ray shielding curtain which is rolled up by the object.

In particular, according to the eighth aspect, length of each of a plurality of strip parts is set to 100 mm or more and 320 mm or less in the X-ray shielding curtain, whereby an object having a certain amount of height can be inspected while limiting weight of the strip parts. Accordingly, the X-ray shielding curtain is pushed aside by the object more easily, and types of object to be inspected can be secured to a certain extent.

In particular, according to the ninth aspect, the color of the X-ray shielding curtain is set to blue. There is hardly any blue food, and thus even when the X-ray shielding curtain is damaged and a part thereof is inadvertently mixed into the food to be inspected in a case of inspecting food, this is visually checked immediately.

In particular, according to the tenth aspect, the thickness of the protective layer formed of a polyolefin resin is set to 0.08 mm or more and 0.1 mm or less, and thus it is possible to further improve flexibility of the X-ray shielding curtain while absorbing the impact of the object on the X-ray shielding curtain. As a result, it is possible to further improve durability of the X-ray shielding curtain while sufficiently exhibiting the function of the protective layer.

In particular, according to the eleventh aspect, the attachment member is formed of a material through which X-rays pass, and thus a degree of flexibility in selecting a material to be used for the attachment member is enhanced. Moreover, the upper end of the tungsten-containing layer enters into an inside of an insertion space of the attachment member formed of the material through which X-rays pass, and thus it is possible to suppress leakage of X-rays from the attachment member.

In particular, according to the twelfth aspect, the upper end of the tungsten-containing layer is not in contact with the suspension member, with the result that it is possible to prevent that the X-ray shielding curtain becomes difficult to be pushed aside due to the contact between the upper end of the tungsten-containing layer and the suspension member.

In particular, according to the thirteenth aspect, the attachment member into which the suspension member is inserted is formed of a metal material, and thus it is possible to reduce friction between the attachment member and the suspension member. Accordingly, the X-ray shielding curtain is pushed aside more easily. Further, the shape of the attachment member becomes difficult to be deformed, whereby it is possible to suppress an increase in contact resistance between the attachment member and the suspension member due to the deformed shape of the attachment member, which makes the X-ray shielding curtain pushed aside more easily. Moreover, the attachment member is formed of a metal material shielding X-rays, whereby it is possible to prevent leakage of X-rays from the attachment member.

In particular, according to the fourteenth aspect, the lower end part of the attachment member has a curved surface, which is opposed to the upper end part of the X-ray shielding curtain and becomes apart from the upper end part of the X-ray shielding curtain as closer to the tip of the lower end part, to be convex toward the upper end part. Accordingly, it is possible to make the contact portion, which is between the X-ray shielding curtain and the lower end part of the attachment member when the X-ray shielding curtain is rolled up, a curved surface. Therefore, it is possible to suppress the X-ray shielding curtain from being damaged in the contact portion with the lower end part of the attachment member.

In particular, according to the fifteenth aspect, the attachment member includes the sandwiching portion which sandwiches the upper end part of the X-ray shielding curtain by surface contact, with the result that it is possible to suppress the X-ray shielding curtain form being damaged by its own weight.

In particular, according to the sixteenth aspect, the attachment member includes the sandwiching portion which sandwiches the upper end part of the X-ray shielding curtain by surface contact, and besides, the attachment member and the upper end part of the X-ray shielding curtain are fastened to each other with a bolt. Accordingly, the X-ray shielding curtain becomes difficult to come off from the attachment member. Further, the fastening with the bolt is achieved at a position above the sandwiching portion of the attachment member, and hence it is possible to prevent the X-ray shielding curtain from dropping thanks to the sandwiching portion of the attachment member even if the X-ray shielding curtain is broken in the portion where the fastening with the bolt is achieved.

These and other objects, features, aspects and advantages of the present invention will become more apparent from the following detailed description of the present invention when taken in conjunction with the accompanying drawings.

### Brief Description of Drawings

FIG. 1 is a perspective view showing an external appearance of an X-ray inspection apparatus according to an embodiment of the present invention.
FIG. 2 is a perspective view showing a state inside a case of the X-ray inspection apparatus according to the embodiment of the present invention.
FIG. 3 is a block diagram showing an electrical configuration of the X-ray inspection apparatus according to the embodiment of the present invention.
FIG. 4 is a view showing a structure of an X-ray shielding curtain according to the embodiment of the present invention.
FIG. 5 is another view showing the structure of the X-ray shielding curtain according to the embodiment of the present invention.
FIG. 6 is a view showing the structure of the X-ray shielding curtain according to the embodiment of the present invention, which is partially enlarged.
FIG. 7 is a figure showing durability test results of the X-ray shielding curtain according to the embodiment of the present invention.
FIG. 8 is a view showing a modification of an attachment structure of the X-ray shielding curtain according to the embodiment of the present invention.
FIG. 9 is a view showing another modification of the attachment structure of the X-ray shielding curtain according to the embodiment of the present invention.
FIG. 10 is a view showing still another modification of the attachment structure of the X-ray shielding curtain according to the embodiment of the present invention.

### Best Mode for Carrying Out the Invention

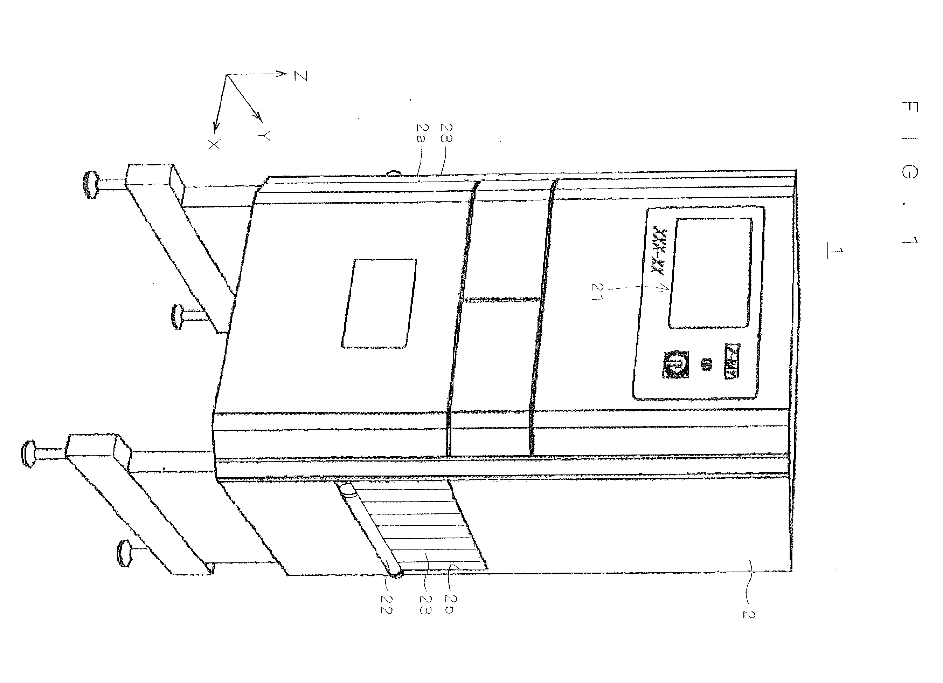

FIG. 1 is a perspective view showing an external appearance of an X-ray inspection apparatus 1 according to an embodiment of the present invention. The X-ray inspection apparatus 1 according to the present embodiment inspects whether or not an object such as food contains a foreign substance such as metal and hard foreign substance (resin or stone) by irradiating the object with X-rays.

In the following description, a three-dimensional XYZ orthogonal coordinate system is appropriately used in showing directions and orientations. This XYZ orthogonal coordinate system is defined relative to a case 2 of the X-ray inspection apparatus 1. An X-axis and a Y-axis indicate horizontal directions, and a Z-axis indicates a vertical direction (a positive Z side is an upper side). In addition, for the sake of description, the X-axis direction is assumed to be a lateral direction (a positive X side is a right side and a negative X side is a left side), and the Y-axis direction is assumed to be a depth direction (a negative Y side is a front surface side and a positive Y side is a back surface side).

As shown in FIG. 1, in the X-ray inspection apparatus 1 according to the present embodiment, an operation panel 21 is attached to a front surface side of the case 2. The operation panel 21 includes a display for displaying various types of information and an operation button for accepting various types of operations from a user, and functions as a user interface. The display of the operation panel 21 is, for example, a touch panel display, and a user is capable of inputting necessary information or instruction to the X-ray inspection apparatus 1 via a screen of the display.

The case 2 is provided with a conveyor 22 functioning as a carrying part which carries an object to be inspected. The object is carried into a carry-in port 2a from an apparatus on an upper-stream side in a production line, carried within the case 2 by the conveyor 22, and then carried out from a carry-out port 2b to an apparatus on a downstream side. In the course of carrying by the conveyor 22, it is inspected whether or not the object contains a foreign substance.

X-ray shielding curtains 23 are provided in each of the carry-in port 2a and the carry-out port 2b. This X-ray shielding curtain 23 has a function of preventing X-rays generated within the case 2 in the case of inspecting an object from leaking to an outside of the case 2. That is, the carry-in port 2a and the carry-out port 2b are covered with the X-ray shielding curtains 23, with the result that X-rays generated within the case 2 are suppressed from leaking to the outside of the case 2.

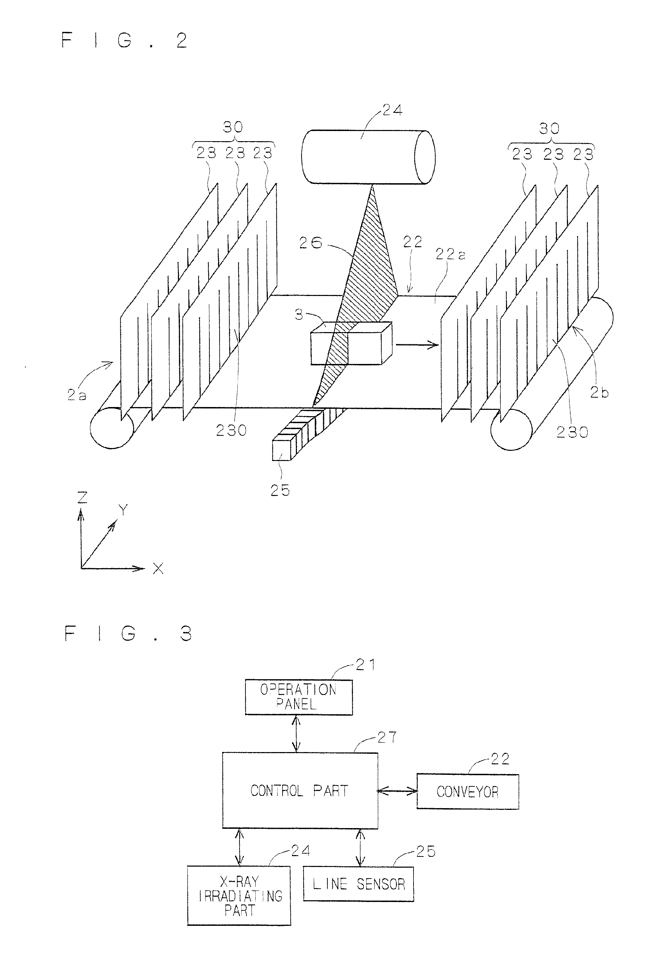

FIG. 2 is a perspective view showing a state inside the case 2 of the X-ray inspection apparatus
1. As shown in FIG. 2, the conveyor 22 includes a belt 22a which moves toward the right side (positive X side), and when an object 3 to be inspected is mounted on the belt 22a, the object 3 is carried toward the right side. The belt 22a is formed of, for example, urethane through which X-rays pass. In the case 2, the conveyor 22 is disposed so that a carrying surface of the belt 22a thereof is substantially horizontal. In addition, an X-ray irradiating part 24 is provided above a center part of the carrying surface of the belt 22a, and a line sensor 25 is provided below the center part.

In the case 2, two pairs of curtain groups 30 in which three X-ray shielding curtains 23 consist a pair are respectively provided on the carry-in port 2a side and the carry-out port 2b side with the center part of the carrying surface of the conveyor 22 being sandwiched therebetween. In the curtain group 30 on the carry-in port 2a side, three X-ray shielding curtains 23 are disposed at equal intervals along the lateral direction (carrying direction of the object 3) so as to block the carry-in port 2a. In the curtain group 30 on the carry-out port 2b side, three X-ray shielding curtains 23 are disposed at equal intervals along the lateral direction so as to block the carry-out port 2b.

Each of the X-ray shielding curtains 23, whose upper end is supported in the case 2, includes a plurality of strip parts 230 suspended downward (toward the negative Z side) in a short split curtain shape. The respective X-ray shielding curtains 23 are disposed so that lower ends of the plurality of strip parts 230 are brought into contact with the carrying surface of the belt 22a. The object 3 carried to the carry-in port 2a enters into the case 2 while pushing aside the strip parts 230 of three X-ray shielding curtains 23 on the carry-in port 2a side in order, and then is carried below the X-ray irradiating part 24. After that, the object 3 passes through the carry-out port 2b while pushing aside the strip parts 230 of three X-ray shielding curtains 23 on the carry-out port 2b side in order, and is carried outside the case 2. Note that FIG. 2 shows a schematic shape of the X-ray shielding curtain 23, and a specific shape of the X-ray shielding curtain 23 will be described below.

The X-ray irradiating part 24 irradiates X-rays 26 in a fan shape toward the line sensor 25 which is provided directly thereunder and functions as an X-ray detecting part. The line sensor 25 is configured such that a plurality of light-receiving sensors for receiving X rays and outputting signal charges corresponding to a light-receiving amount thereof are disposed on the lines. The line sensor 25 is disposed along the Y-axis direction orthogonal to the carrying direction of the object 3 so as to receive the X-rays 26 which have been irradiated from the X-ray irradiating part 24 and passed through the belt 22a of the conveyor 22. In a case where the object 3 is positioned between the X-ray irradiating part 24 and the line sensor 25, the X-rays 26 which have passed through the object 3 are detected by the line sensor 25, and signal charges indicating a strength of the X-rays 26 which have passed through the object 3 are output from the line sensor 25.

The signal charges from the line sensor 25 become line images indicating an image of the object 3 along the Y-axis direction. These line images are output successively from the line sensor 25 every time the object 3 is carried toward the positive X side by a predetermined distance. Then, these line images are coupled two-dimensionally, whereby a two-dimensional inspection image indicating an entire image of the object 3 is generated. A foreign substance contained in the object 3 is detected based on this inspection image.

Moreover, in the case 2, there is provided a control part 27 which manages an operation of the X-ray inspection apparatus 1 overall. FIG. 3 is a block diagram showing an electrical configuration of the X-ray inspection apparatus 1. The control part 27 is a computer composed of a CPU, a memory and the like, and controls operations of the operation panel 21, the conveyor 22, the X-ray irradiating part 24 and the line sensor 25.

The control part 27 receives operation information of a user through the operation panel 21, and performs an operation corresponding to the input operation information. In addition, the control part 27 receives the line image from the line sensor 25. The control part 27 generates an inspection image indicating the entire object 3 based on a plurality of line images of the object 3 which are generated by the line sensor 25, and determines whether or not the object 3 to be inspected contains a foreign substance.

Here, X-rays hardly pass through the foreign substance contained in the object 3, such as metal, and thus luminance of a region indicating the foreign substance is lower in the inspection image generated by the control part 27 compared with other region. Accordingly, the control part 27 is capable of specifying a foreign substance contained in the object 3 by detecting a region having low luminance in the inspection image.

After the inspection of certain object 3 is finished, the control part 27 controls the operation panel 21 to display inspection results on the display thereof. On the display of the operation panel 21, there is displayed, for example, an inspection image in which a region indicating a foreign substance is marked in a color different from that of other region or an inspection image in which a region indicating a foreign substance is marked by a predetermined symbol. As a result, the user refers to display contents on the display of the operation panel 21 to visually check whether or not the object 3 contains a foreign substance.

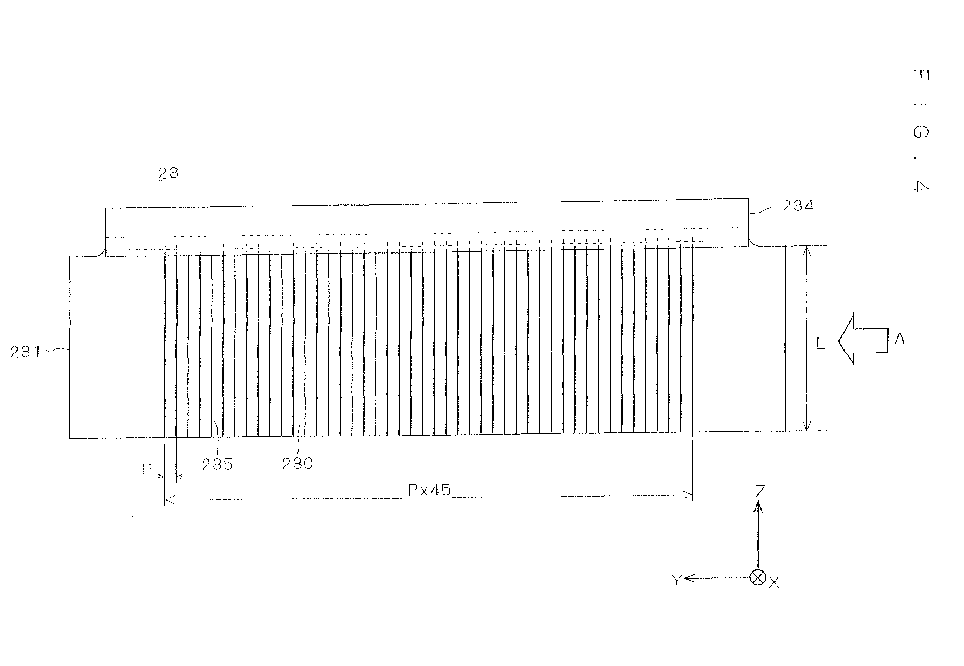

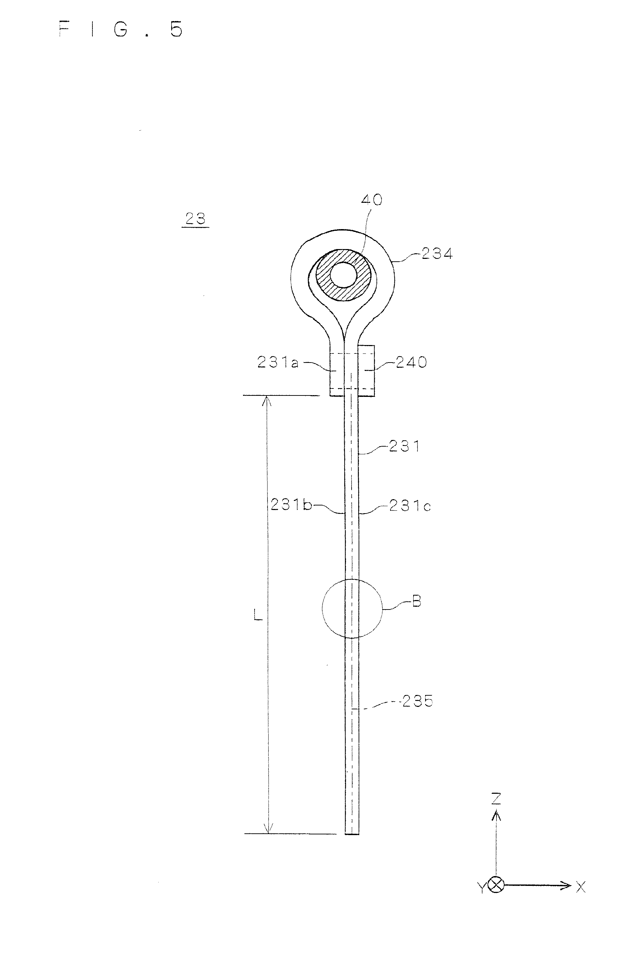

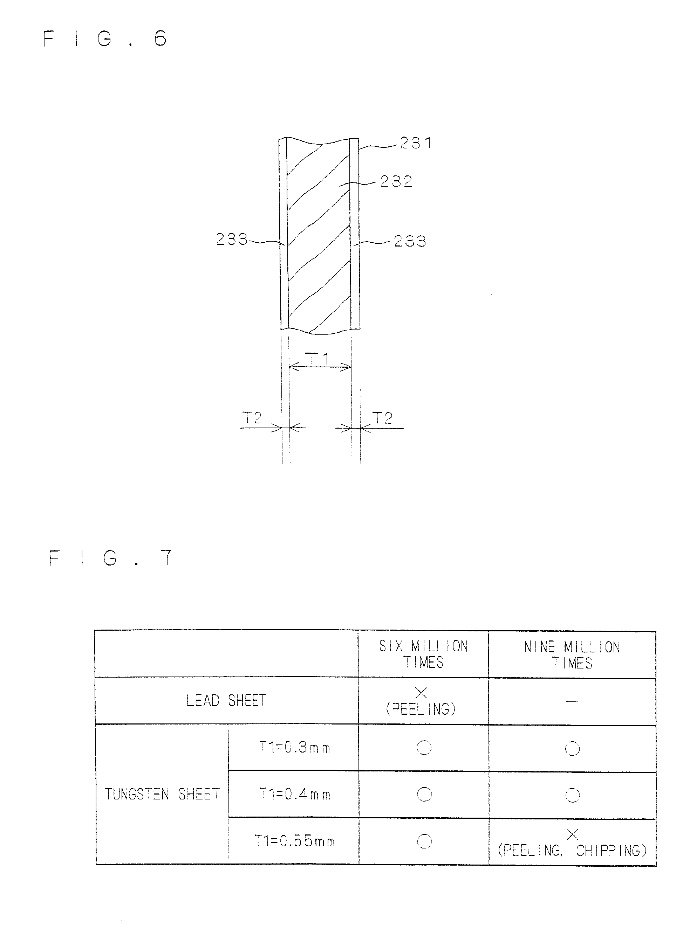

Next, a structure of the X-ray shielding curtain 23 according to the present embodiment will be described in detail. FIGS. 4 to 6 are views showing the structure of the X-ray shielding curtain 23. FIG. 4 shows the structure of the X-ray shielding curtain 23 when the X-ray shielding curtain 23 on the carry-in port 2a side is viewed from the outside of the case 2, FIG. 5 shows the structure when the structure shown in FIG. 4 is viewed from an arrow A, and FIG. 6 shows an enlarged portion B of FIG. 5.

As shown in FIGS. 4 to 6, the X-ray shielding curtain 23 is formed of a sheet-like laminate material 231 as a main material. As shown in FIG. 6, the laminate material 231 is composed of a tungsten-containing layer 232 containing tungsten and protective layers 233 laminated on both main surfaces of the tungsten-containing layer 232. The protective layer 233 is formed of, for example, a polyolefin resin, and has an elasticity higher than that of the tungsten-containing layer 232. Therefore, the protective layer 233 absorbs the impact of the object 3 on the X-ray shielding curtain 23, which improves durability of the X-ray shielding curtain 23.

In the present embodiment, a content rate of tungsten in the tungsten-containing layer 232 is set to 70wt% or more and 80wt% or less. Besides, a thickness T1 of the tungsten-containing layer 232 is set to 0.3 mm or more and less than 1.0 mm. A thickness T2 of the protective layer 233 is set to 0.08 mm or more and 0.1 mm or less.

In the laminate material 231, a width of an upper part thereof is narrower than that of other portion. Besides, as shown in FIG. 5, the upper part of the laminate material 231 is roundly curved so that an upper end part 231a is in contact with one main surface 231b. On the other main surface 231c of the laminate material 231, a sheet-like protective material 240 is provided so as to be opposed to the upper end part 231a being in contact with the main surface 231b. The upper end part 231a and the protective material 240 are sewn to each other at two locations with a part of the laminate material 231 being sandwiched therebetween. Two broken lines extending in the Y-axis direction of FIG. 4 and two broken lines of FIG. 5 indicate seams of the upper end part 231a and the protective material 240. As in the laminate material 231, the sheet-like protective material 240 is composed of the tungsten-containing layer 232 and the protective layers 233 formed on both main surfaces thereof.

As shown in FIG. 5, in the X-ray shielding curtain 23, the upper part of the laminate material 231 is roundly curved so that the upper end part 231a of the laminate material 231 is in contact with the main surface 231b, whereby a cylinder-shaped (tubular) attachment portion 234 is formed. A rod-like suspension member 40 by which the X-ray shielding curtain 23 is suspended is inserted into this attachment portion 234. The suspension member 40 is, for example, a tubular member made of metal, and an outer periphery thereof is circular in cross section. The suspension member 40 is fixed in the case 2. Accordingly, the upper end of the X-ray shielding curtain 23 is supported in the case 2 so that the X-ray shielding curtain 23 is hung. When the object 3 to be inspected comes into contact with the X-ray shielding curtain 23, the strip parts 230 are rolled up, and the entire X-ray shielding curtain 23 pivots with the suspension member 40 being as an axis. The X-ray shielding curtain 23 is suspended by the suspension member 40, and accordingly an inner peripheral surface of the attachment portion 234 and an outer peripheral surface of the suspension member 40 are brought into contact with each other on curved surfaces. As a result, it is possible to suppress stress from being applied concentratedly on a certain location of the attachment portion 234 due to the contact with the suspension member 40, which suppresses the X-ray shielding curtain 23 to be damaged. Besides, the X-ray shielding curtain 23 is pushed aside more easily.

In the X-ray shielding curtain 23, a plurality of slits 235 are formed at predetermined intervals P so that a plurality of strip parts 230 are hung in a short split curtain shape. In the X-ray shielding curtain 23, for example, forty-five slits 235 are formed, and the predetermined interval P is set to 10 mm or more and 20 mm or less. That is, a width of the strip part 230 is set to 10 mm or more and 20 mm or less.
Each slit 235 extends from a lower end of the laminate material 231 to a vicinity of a center of a region of the laminate material 231 which is sandwiched between the upper end part 231a and the protective material 240. Accordingly, upper end parts of the respective slits 235 are covered with the upper end part 231a of the laminate material 231 and the protective material 240 and are not exposed. The upper end part 231a of the laminate material 231 and the protective material 240 are sewn to each other at two locations in a vertical direction with the upper end of the slit 235 being sandwiched therebetween. As a result, it is possible to suppress stress from being applied on a vicinity of the upper end of the slit 235 when the carried object 3 comes into contact with the strip parts 230 and the strip parts 230 are rolled up, which prevents the laminate material 231 from tearing from the upper end of the slit 235.

Herein, the strip part 230 refers to a region defined between exposed portions of the slits 235 in the X-ray shielding curtain 23. That is, the strip part 230 refers to a strip-like portion which is visible in an external appearance of the X-ray shielding curtain 23. Therefore, the strip part 230 does not include a portion of the laminate material 231, which is covered with the upper end part 231a thereof and the protective material 240. In the present embodiment, a length L of the strip part 230 is set to 100 mm or more and 320 mm or less. That is, a length of the exposed portion of the slit 235 is set to 100 mm or more and 320 mm or less. Note that an overall length of the slit 235 and the length L of the strip part 230 are equal to each other in a case where an entire region of the slit 235 is exposed.

Further, in the present embodiment, both the tungsten-containing layer 232 and the protective layer 233 comply with the Food Sanitation Act. Therefore, it is possible to inspect food in the X-ray inspection apparatus 1 with more safety.

Further, a color of the protective layer 233 is set to blue. For this reason, a color of a surface of the X-ray shielding curtain 23 is blue. There are hardly any blue food, and hence if the color of the X-ray shielding curtain 23 is made blue as in the present embodiment, in a case where the X-ray shielding curtain 23 is damaged and a part thereof is inadvertently mixed in the food to be inspected in inspecting food, this can be visually checked immediately.

The X-ray shielding curtain 23 according to the present embodiment is configured as descried above, and thus durability is dramatically improved. FIG. 7 is a figure showing results of durability test of the X-ray shielding curtain 23. In FIG. 7, "tungsten sheet" refers to the X-ray shielding curtain 23 according to the present embodiment, and "lead sheet" refers to a target X-ray shielding curtain (hereinafter, referred to as "comparison target curtain") to be compared with the X-ray shielding curtain 23. In the comparison target curtain, a protective layer formed of a vinyl chloride resin is laminated only on one surface of a sheet-like lead-containing layer which contains lead, and a thickness of the lead-containing layer is set to 1.0 mm. Other structure of the comparison target curtain is similar to that of the X-ray shielding curtain 23.

In a case where the comparison target curtains are used in place of the respective X-ray shielding curtains 23 in the X-ray inspection apparatus 1 according to the present embodiment, in the case 2, three comparison target curtains on the carry-in port 2a side are attached so that the protective layers thereof face the carry-in port 2a side, and that three comparison target curtains on the carry-out port 2b side are attached so that the protective layers thereof face the carry-out port 2b. FIG. 7 shows results in a case where a bar-like member having a height of 50 mm is attached to the conveyor 22 so as to extend in the Y-axis direction, and the conveyor 22 is driven so that the bar-like member comes into contact with each X-ray shielding curtain 23 or the comparison target curtain at a rate of 100 times per minute.

As shown in FIG. 7, it was confirmed that when the bar-like member was caused to come into contact with the comparison target curtain (lead sheet) six million times, the protective layer peeled off from the lead-containing layer at a lower end (open end) of the comparison target curtain.

In contrast to this, in a case where the bar-like member was caused to come into contact with the X-ray shielding curtains 23 in which the thicknesses of the tungsten-containing layer 232 are respectively 0.3 mm, 0.4 mm and 0.55 mm, it was not confirmed that the protective layer 233 peeled off from the tungsten-containing layer 232. In the X-ray shielding curtain 23 in which the thickness T1 of the tungsten-containing layer 232 is 0.55 m, it was confirmed that, when the number of impacts on the bar-like member reaches nine million times, the protective layer 233 peels off from the tungsten-containing layer 232 at a lower end thereof and the laminate material 231 is chipped. Note that in the X-ray shielding curtains 23 in which the thicknesses T1 of the tungsten-containing layer 232 are respectively 0.3 m and 0.4 mm, it was not confirmed that the protective layer 233 peels off or the laminate material 231 is chipped even when the number of impacts on the bar-like member reaches nine million times.

As described above, it is understood from the experimental results shown in FIG. 7 that the durability of the X-ray shielding curtain 23 according to the present embodiment is remarkably improved.

Further, an experiment was performed to measure a leakage amount of X-rays from the X-ray inspection apparatus 1 according to the present embodiment which includes the X-ray shielding curtains 23 and a leakage amount of X-rays from the X-ray inspection apparatus 1 which includes the comparison target curtains in place of the X-ray shielding curtains 23. As a result, it was confirmed that there was hardly any difference between the leakage amounts of X-rays from both apparatuses. Thus, it could be said that the X-ray shielding curtain 23 and the comparison target curtain have functions of shielding X-rays, which are equal to each other.

As described above, in the X-ray inspection apparatus 1 according to the present embodiment, the X-ray shielding curtain 23 includes the tungsten-containing layer 232, with the result that it is possible to enhance flexibility of the X-ray shielding curtain 23 with which the object 3 comes into contact and improve durability thereof while maintaining the function of shielding X-rays of the X-ray shielding curtain 23.

Further, in the X-ray shielding curtain 23 according to the present embodiment, the protective layers 233 formed of a polyolefin resin are laminated on the tungsten-containing layer 232, with the result that the protective films 233 can absorb the impact of the object 3 on the X-ray shielding curtain 23. Moreover, compared with the case where the protective layer 233 is formed of a vinyl chloride resin, flexibility of the X-ray shielding curtain 23 is improved, and the protective layer 233 becomes difficult to peel off from the tungsten-containing layer 232. As a result, durability of the X-ray shielding curtain 23 is further improved.

Further, in the comparison target curtain described above, the protective layer is provided only on one side of the lead-containing layer, and thus if a period of use becomes longer, the comparison target curtain deforms due to a difference in expansion coefficient between the lead-containing layer and the protective layer in some cases. Specifically, the protective layer has an expansion coefficient larger than that of the lead-containing layer, and thus in some cases, the comparison target curtain is bent with a main surface of the lead-containing layer, on which the protective layer is not formed, facing inward. As a result, in some cases, a large gap is generated between a plurality of strip parts, which reduces the function of shielding X-rays. Moreover, the protective layer is provided only on one surface of the lead-containing layer in the comparison target curtain, and hence if the carrying direction of the object 3 changes from the positive X side to the negative X side, the object 3 directly comes into contact with the lead-containing layer. Therefore, an orientation of the comparison target curtain needs to be changed, increasing efforts of an operator.

In contrast to this, in the X-ray shielding curtain 23 according to the present embodiment, the protective layers 233 are provided on both sides of the tungsten-containing layer 232, whereby it is possible to suppress the X-ray shielding curtain 23 from deforming due to a difference in expansion coefficient between the tungsten-containing layer 232 and the protective layer 233. Moreover, there is no need to change an orientation of the X-ray shielding curtain 23 even in a case where the carrying direction of the object 3 is changed, which reduces efforts of the operator.

Further, in the X-ray shielding curtain 23 according to the present embodiment, a content rate of tungsten in the tungsten-containing layer 232 is set to an appropriate value of 70wt% or more and 80wt% or less. Accordingly, it is possible to further improve flexibility of the X-ray shielding curtain 23 and improve durability thereof while maintaining the function of shielding X-rays of the X-ray shielding curtain 23. Further, the thickness T1 of the tungsten-containing layer 232 of the X-ray shielding curtain 23 is set to an appropriate value of 0.3 mm or more and less than 1.0 mm. Therefore, it is possible to further improving flexibility of the X-ray shielding curtain 23 and improve durability thereof while maintaining the function of shielding X-rays of the X-ray shielding curtain 23.

Further, in the X-ray shielding curtain 23, if the predetermined intervals P which are arrangement intervals of a plurality of slits 235 are excessively large, a portion of the X-ray shielding curtain 23 which is rolled up by the object 3 becomes large when the object 3 passes through the X-ray shielding curtain 23, which degrades the function of shielding X-rays. On the other hand, if the predetermined intervals P are excessively small, the respective strip parts 230 become thinner. As a result, in some cases, a plurality of strip parts 230 are tangled with each other when the object 3 passes through the X-ray shielding curtain 23.

In the X-ray shielding curtain 23 according to the present embodiment, a plurality of slits 235 are provided at appropriate intervals of 10 mm or more and 20 mm or less. Accordingly, it is possible to suppress a plurality of strip parts 230 from become tangled with each other while decreasing the portion of the X-ray shielding curtain 23 which is rolled up by the object 3.

Further, in the X-ray shielding curtain 23, if the length L of the short part 230 increases and a weight of the strip part 230 becomes excessively large, in some cases, the X-ray shielding curtain 23 becomes difficult to be pushed aside by the object 3, which damages the object 3. On the other hand, if the length L of the strip part 230 is excessively small, a limitation is imposed on the height of the object 3, to thereby limit the type of the object 3 to be inspected.

In the X-ray shielding curtain 23 according to the present embodiment, the length L of each of a plurality of strip parts 230 is set to an appropriate value of 100 mm or more and 320 mm or less. Accordingly, it is possible to deal with the object 3 having a certain amount of height as the inspection target while restraining the weight of the strip part 230. Therefore, the X-ray shielding curtain 23 is pushed aside by the object 3 more easily, and in addition, it is possible to secure types of the object 3 to be inspected to a certain extent.

Further, in the X-ray shielding curtain 23, the impact of the object 3 on the X-ray shielding curtain 23 is not absorbed sufficiently if the thickness T2 of the protective layer 233 is excessively small, whereas flexibility of the X-ray shielding curtain 23 decreases if the thickness T2 is excessively large.

In the present embodiment, the thickness T2 of the protective layer 233 is set to an appropriate value of 0.08 mm or more and 0.1 mm or less, and thus it is possible to further improve flexibility of the X-ray shielding curtain 23 while absorbing the impact of the object 3 on the X-ray shielding curtain 23. As a result, it is possible to further improve durability of the X-ray shielding curtain 23 while exerting the function of the protective layer 233 sufficiently.

### (Modification of attachment structure of X-ray shielding curtain)

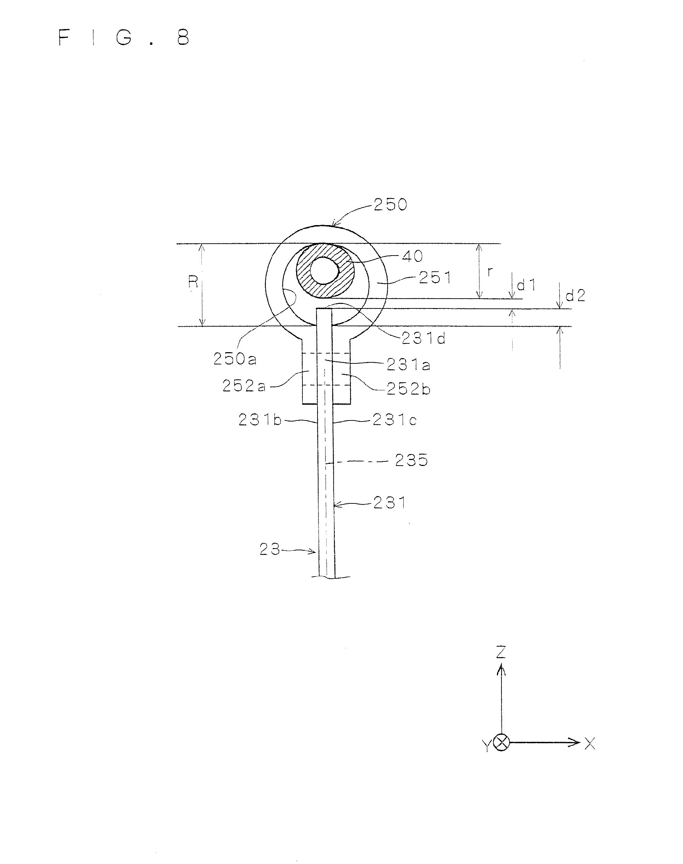

Next, various modifications of the attachment structure of the X-ray shielding curtain 23 will be described. FIG. 8 is a view showing an attachment structure according to a first modification of the X-ray shielding curtain 23. FIG. 8 shows structures of the X-ray shielding curtain 23, an attachment member 250 and the suspension member 40 in cross section along the Z-axis direction.

The X-ray shielding curtain 23 shown in FIG. 8 is formed of only the above-mentioned laminate material 231. The attachment member 250 including an insertion space 250a into which the suspension member 40 is inserted is attached to the upper end part 231a of the laminate material 231. The attachment member 250 extends along the Y-axis direction and is attached to the upper end part 231a so as to sandwich the upper end part 231a of the laminate material 231. The attachment member 250 is formed of, for example, urethane through which X-rays pass as in the belt 22a. The attachment member 250 includes, at a lower part thereof, a pair of plate-like portions 252a and 252b which are opposed to each other with the upper end part 231a of the laminate material 231 being sandwiched therebetween and extend along the Y-axis direction. The attachment member 250 includes, at an upper part thereof, a tubular portion 251 which extends along the Y-axis direction and is continuous from an upper end of the plate-like portion 252a to an upper end of the plate-like portion 252b so as to cover an upper end 231d of the laminate material 231. The insertion space 250a is defined by an inner surface of this tubular portion 251, and the suspension member 40 is inserted into a hole of the tubular portion 251. Two plate-like portions 252a and 252b are sewn to each other at two locations with the upper end part 231a of the laminate material 231 being sandwiched therebetween. Note that two broken lines of FIG. 8 indicate seams of the upper end part 231a and the plate-like portions 252a and 252b.

When the X-ray shielding curtain 23 is suspended by the suspension member 40, an inner peripheral surface of the tubular portion 251 of the attachment member 250 and the outer peripheral surface of the suspension member 40 are brought into contact with each other on curved surfaces. As a result, it is possible to suppress stress from being concentratedly applied on a certain location of the attachment member 250 due to the contact with the suspension member 40. Accordingly, it is possible to suppress the attachment member 250 from being damaged, and the X-ray shielding curtain 23 is pushed aside more easily.

In the laminate material 231 forming the X-ray shielding curtain 23, a width of the upper end part 231 a thereof, that is, a length in the Y-axis direction is shorter than that of other portion. In addition, a length of the attachment member 250 in the Y-axis direction substantially coincides with a length of the upper end part 231a of the laminate material 231 in the Y-axis direction, and the attachment member 250 is provided over an entire region of the upper end part 231a of the laminate material 231. A plurality of slits 235 provided in the laminate material 231 extend from the lower end of the laminate material 231 to a vicinity of a center of a region of the laminate material 231 which is sandwiched between the plate-like portions 252a and 252b of the attachment member 250. The upper end part 231a of the laminate material 231 and the plate-like portions 252a and 252b of the attachment member 250 are sewn to each other at two locations in a vertical direction with the upper end of the slit 235 being sandwiched therebetween. As a result, as in the X-ray shielding curtain 23 shown in FIGS. 4 to 6, it is possible to suppress stress from being applied on the vicinity of the upper end of the slit 235 when the carried object 3 comes into contact with the strip parts 230 and the strip parts 230 are rolled up. Accordingly, it is possible to prevent the laminate material 231 from tearing from the upper end of the slit 235.

Here, the attachment member 250 is formed of a material through which X-rays pass as described above, and hence X-rays may leak from the attachment member 250 to an outside thereof only when the attachment member 250 is merely attached to the upper end part 231a of the laminate material 231.

Then, as shown in FIG. 8, the upper end part 231a of the laminate material 231 is sandwiched between a pair of plate-like portions 252a and 252b so that the upper end 231d of the laminate material 231 enters into an inside of the insertion space 250a of the attachment member 250. As a result, the upper end of the tungsten-containing layer 232 enters into the insertion space 250a, whereby it is possible to suppress X-rays from leaking from the tubular portion 251 of the attachment member 250.

In the present embodiment, for example, a diameter R of the insertion space 250a, that is, an inner diameter of the tubular portion 251 is set to 6 mm, and an outer diameter r of the tubular suspension member 40 is set to 3 mm. Besides, an entering distance d2 of the upper end 231d of the laminate material 231 into the insertion space 250a is set to 2 mm. Therefore, if the X-ray shielding curtain 23 is suspended by the suspension member 40 so that the outer perimeter of the suspension member 40 and the inner periphery of the tubular portion 251 of the attachment member 250 are brought into contact with each other as shown in FIG. 8, a distance d1 between the outer perimeter of the suspension member 40 and the upper end 231d of the laminate material 231 is 1 mm. In the state where the X-ray shielding curtain 23 is suspended by the suspension member 40 in this manner, the suspension member 40 and the laminate material 231 are not brought into contact with each other. Accordingly, it is possible to prevent that the suspension member 40 and the laminate material 231 are brought into contact with each other to make it difficult for the X-ray shielding curtain 23 to be pushed aside.

As described above, the attachment member 250 for attaching the X-ray shielding curtain 23 to the suspension member 40 is formed of a material through which X-rays pass, whereby a degree of flexibility in selecting a material to be used for the attachment member 250 is enhanced. Further, the upper end of the tungsten-containing layer 232 enters into the inside of the insertion space 250a of the attachment member 250 formed of a material through which X-rays pass, whereby it is possible to suppress leakage of X-rays from the attachment member 250.

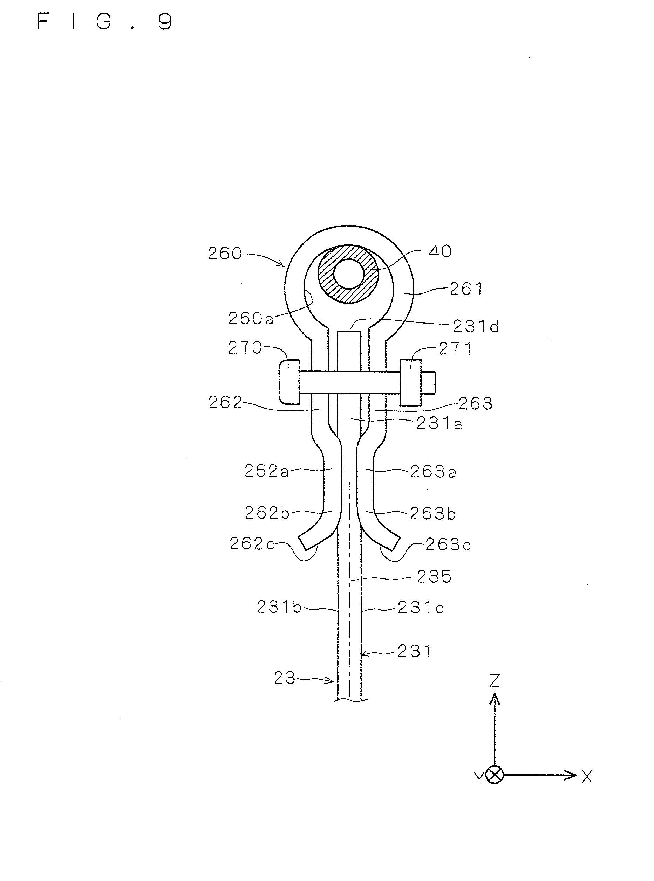

Next, an attachment structure according to a second modification of the X-ray shielding curtain 23 will be described. FIG. 9 is a view showing the attachment structure according to the second modification. FIG. 9 shows structures of the X-ray shielding curtain 23, an attachment member 260 and the suspension member 40 in cross section along the Z-axis direction.

The X-ray shielding curtain 23 shown in FIG. 9 is formed of only the laminate material 231 as in the X-ray shielding curtain 23 of FIG. 8. The attachment member 260 including an insertion space 260a to which the suspension member 40 is inserted is attached to the upper end part 231a of the laminate material 231. As in the above-mentioned attachment member 250, the attachment member 260 extends along the Y-axis direction and is attached to the upper end part 231a so as to sandwich the upper end part 231a of the laminate material 231. The attachment member 260 is formed of a metal material shielding X-rays, such as lead and tungsten. The attachment member 260 includes a pair of opposing portions 262 and 263 which are opposed to each other with the upper end part 231a of the laminate material 231 being sandwiched therebetween and extend along the Y-axis direction. The attachment member 260 includes, at an upper end part thereof, a tubular portion 261 which extends along the Y-axis direction and is continuous from an upper end of the opposing portion 262 to an upper end of the opposing portion 263 so as to cover the upper end 231d of the laminate material 231. The insertion space 260a is defined by an inner surface of this tubular portion 261, and the suspension member 40 is inserted into a hole of the tubular portion 261. When the X-ray shielding curtain 23 is suspended by the suspension member 40, an inner peripheral surface of the tubular portion 261 of the attachment member 260 and the outer peripheral surface of the suspension member 40 are brought into contact with each other on curved surfaces. As a result, it is possible to suppress stress from being concentratedly applied on a certain location of the attachment member 260 due to the contact with the suspension member 40. Accordingly, the attachment member 260 becomes resistant to damage, and at the same time, the X-ray shielding curtain 23 is pushed aside more easily.

A pair of opposing portions 262 and 263 include a pair of sandwiching portions 262a and 263a which sandwich the upper end part 231a of the laminate material 231 by surface contact, respectively. Besides, a lower end part 262b of the opposing portion 262 is roundly curved to be convex toward the laminate material 231. That is, the lower end part 262b of the opposing portion 262 is provided with R so as to become convex toward the laminate material 231. As a result, the lower end part 262b of the opposing portion 262 is provided with a curved surface 262c, which is opposed to the upper end part 231a of the laminate material 231 and becomes apart from the upper end part 231a as closer to a tip of the lower end part 262b, to become convex toward the upper end part 231a.

In the same manner, a lower end part 263b of the opposing portion 263 is roundly curved to be convex toward the laminate material 231. That is, the lower end part 263b of the opposing portion 263 is provided with R so as to be convex toward the laminate material 231. Accordingly, the lower end part 263b of the opposing portion 263 is provided with a curved surface 263c, which is opposed to the upper end part 231a a of the laminate material 231 and becomes apart from the upper end part 231a as closer to a tip of the lower end part 263b, to become convex toward the upper end part 231a.

Note that in this example, the lower part of the sandwiching portion 262a constitutes a part of the lower end part 262b and the lower part of the sandwiching portion 263a constitutes a part of the lower end part 263b.

In the laminate material 231 constituting the X-ray shielding curtain 23 shown in FIG. 9, as in the laminate material 231 of FIG. 8, the width of the upper end part 231a thereof, that is, the length in the Y-axis direction is shorter than that of other portion. The length of the attachment member 260 in the Y-axis direction substantially coincides with the length of the upper end part 231a of the laminate material 231 in the Y-axis direction, and the attachment member 260 is provided over the entire region of the upper end part 231a of the laminate material 231. A plurality of slits 235 provided in the laminate material 231 extend from the lower end of the laminate material 231 to a vicinity of a center of a region of the laminate material 231 which is in contact with the sandwiching portions 262a and 263a of the attachment member 260. As a result, it is possible to suppress stress from being applied on a vicinity of the upper end of the slit 235 when the carried object 3 comes into contact with the short strip parts 230 and the strip parts 230 are rolled up, which prevents the laminate material 231 from tearing from the upper end of the slit 235.

Further, the attachment member 260 and the upper end part 231a of the laminate material 231 are fastened to each other with a bolt at a position above the sandwiching portions 262a and 263a of the attachment member 260. Specifically, a bolt 270, which pierces through the opposing portions 262 and 263 of the attachment member 260 and the upper end part 231a of the laminate material 231, is provided at the position above the sandwiching portions 262a and 263a of the attachment member 260, and a lock nut 271 is tightened to the bolt 270. This fastening with a bolt is achieved at three locations or four locations which are aligned along the Y-axis direction.

As described above, the attachment member 260 into which the suspension member 40 is inserted is formed of a metal material, and thus friction between the attachment member 260 and the suspension member 40 is reduced compared with the case of FIG. 8. Therefore, the X-ray shielding curtain 23 is pushed aside with more ease.

Further, the attachment member 260 is formed of a metal material, and thus it is possible to suppress the attachment member 260 from being deformed by a self-weight of the X-ray shielding curtain 23 when the X-ray shielding curtain 23 is suspended. The attachment member 250 is formed of urethane in the example of FIG. 8, and in the case where the suspension member 40 is inserted into the attachment member 250 and the X-ray shielding curtain 23 is suspended by the suspension member 40, the tubular portion 251 of the attachment member 250 is susceptible to deformation by the self-weight of the X-ray shielding curtain 23, which increases a contact area between the attachment member 250 and the suspension member 40. As a result, a contact resistance between the suspension member 250 and the suspension member 40 increases, which makes it difficult to push aside the X-ray shielding curtain 23 by the object 3 to be inspected in some cases. In the example of FIG. 9, the attachment member 260 is resistant to deformation, whereby it is possible to suppress that the X-ray shielding curtain 23 becomes difficult to be pushed aside due to an increase in contact resistance between the attachment member 260 and the suspension member 40.

Further, the attachment member 260 is formed of a metal material shielding X-rays, whereby it is possible to suppress the leakage of X-rays from the attachment member 260.

Further, the lower end part of the attachment member 260 is provided with the curved surfaces 262c and 263 c, which are opposed to the upper end part 231a of the laminate material 231, that is, the upper end part of the X-ray shielding curtain 23 and become apart from the upper end part of the X-ray shielding curtain 23 as closer to the tip of the lower end part, to be convex toward the upper end part. Accordingly, the contact surface between the X-ray shielding curtain 23 and the lower end part of the attachment member 260 when the object 3 comes into contact the X-ray shielding curtain 23 and the X-ray shielding curtain 23 is rolled up is made a curved surface.

In contrast, in the case where the lower end part of the attachment member 260 is formed in a similar shape to that of the lower end part of the attachment member 250 shown in FIG. 8, the X-ray shielding curtain 23 abuts against a corner part of the lower end part of the attachment member 260 formed of a metal material when the X-ray shielding curtain 23 is rolled up. Accordingly, in some cases, large stress is applied on the X-ray shielding curtain 23, whereby the X-ray shielding curtain 23 is damaged.

In the example of FIG. 9, the contact portion between the X-ray shielding curtain 23 and the lower end part of the attachment member 260 when the X-ray shielding curtain 23 is rolled up is made a curved surface, with the result that it is possible to suppress the X-ray shielding curtain 23 to be damaged in the contact portion with the lower end part of the attachment member 260.

Further, in the example of FIG. 9, the upper end part of the X-ray shielding curtain 23 is sandwiched by the sandwiching portions 262a and 263a of the attachment member 260 therebetween by surface contact, whereby the attachment member 260 is attached to the X-ray shielding curtain 23. Unlike this, however, in the case where the attachment member 260 is attached to the X-ray shielding curtain 23 only by being fastened with a bolt, the X-ray shielding curtain 23 is broken by its own weight from the portion into which the bolt is inserted in some cases. In the example of FIG. 9, the attachment member 260 includes the sandwiching portions 262a and 263a which sandwich the upper end part of the X-ray shielding curtain 23 therebetween by surface contact, whereby it is possible to suppress the X-ray shielding curtain 23 from being damaged by its own weight.

Further, in the example of FIG. 9, the attachment member 260 includes the sandwiching portions 262a and 263 a, and besides, the attachment member 260 and the upper end part of the X-ray shielding curtain 23 are fastened to each other with a bolt. Accordingly, the attachment member 260 becomes difficult to come off from the X-ray shielding curtain 23. Moreover, the fastening with the bolt is achieved at the position above the sandwiching portions 262a and 263a of the attachment member 260, whereby it is possible to reduce stress applied on the location of the X-ray shielding curtain 23, into which the bolt is inserted, by the self-weight of the X-ray shielding curtain 23. In addition, if the X-ray shielding curtain 23 is broken by its own weight from the portion into which the bolt is inserted, it is possible to prevent the X-ray shielding curtain 23 from dropping by the sandwiching portions 262a and 263a of the attachment member 260.

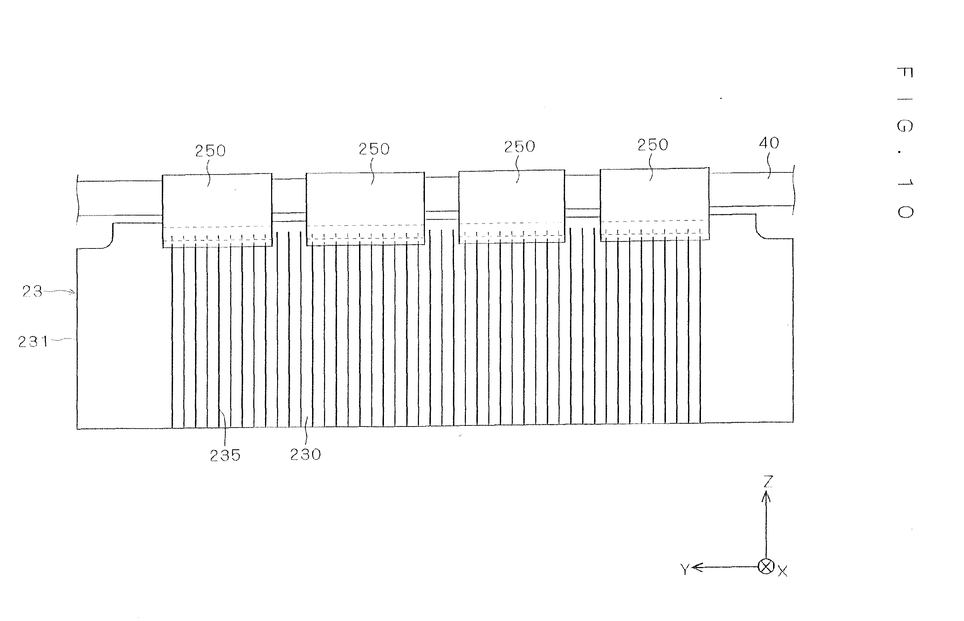

Note that one attachment member 250 is provided over the entire region of the upper end part of the X-ray shielding curtain 23 in the example of FIG. 8, but a plurality of attachment members 250 may be attached to the upper end part of the X-ray shielding curtain 23 at intervals. Further, one attachment member 260 is provided over the entire region of the upper end part of the X-ray shielding curtain 23 in the example of FIG. 9, but a plurality of attachment members 260 may be attached to the upper end part of the X-ray shielding curtain 23 at intervals. FIG. 10 is a view showing a state in which a plurality of attachment members 250 are attached to the upper end part of the X-ray shielding curtain 23 at intervals.
In the case of FIG. 10, locations to which the attachment member 250 is not attached are generated in the upper end part of the X-ray shielding curtain 23, and a gap is created between the suspension member 40 and the X-ray shielding curtain 23. A length of this gap is desirably set to approximately 1 mm in terms of suppressing leakage of X-rays.

As described above, a plurality of attachment members 250 or a plurality of attachment members 260 are attached to the upper end part of the X-ray shielding curtain 23 at intervals, whereby it is possible to reduce a contact resistance between the suspension member 40 and the attachment member 250 or the attachment member 260. Therefore, the X-ray shielding curtain 23 is pushed aside with more ease.

While the invention has been shown and described in detail, the foregoing description is in all aspects illustrative and not restrictive. It is therefore understood that numerous modifications and variations can be devised without departing from the scope of the invention.

## Claims

1. An X-ray inspection apparatus, comprising:
a carrying part (22) for carrying an object (3) carried in from a carry-in port (2a) to a carry-out port (2b);
an X-ray irradiating part (24) for irradiating said object carried by said carrying part with X-rays (26);
an X-ray detection part (25) for detecting said X-rays from said X-ray irradiating part which have passed through said object; and
an X-ray shielding curtain (23) provided in at least one of said carry-in port and said carry-out port,
wherein said X-ray shielding curtain includes a tungsten-containing layer (232).

2. The X-ray inspection apparatus according to Claim 1, wherein said X-ray shielding curtain includes a protective layer (233) laminated on said tungsten-containing layer and formed of a polyolefin resin.

3. The X-ray inspection apparatus according to Claim 2, wherein said protective layers are laminated on both surfaces of said tungsten-containing layer.

4. The X-ray inspection apparatus according to Claim 1, wherein said X-ray shielding curtain includes protective layers (233) laminated on both surfaces of said tungsten-containing layer and having elasticity higher than that of said tungsten-containing layer.

5. The X-ray inspection apparatus according to any one of Claims 1 to 4, wherein a content rate of tungsten in said tungsten-containing layer is set to 70wt% or more and 80wt% or less.

6. The X-ray inspection apparatus according to any one of Claims 1 to 5, wherein a thickness (T1) of said tungsten-containing layer is set to 0.3 mm or more and less than 1.0 mm.

7. The X-ray inspection apparatus according to any one of Claims 1 to 6, wherein:
said X-ray shielding curtain is provided with a plurality of slits (235) at predetermined intervals (P) so that a plurality of strip parts (230) are hung in a short split curtain shape; and
said predetermined intervals are set to 10 mm or more and 20 mm or less.

8. The X-ray inspection apparatus according to any one of Claims 1 to 6, wherein:
said X-ray shielding curtain is provided with a plurality of slits (235) at predetermined intervals (P) so that a plurality of strip parts (230) are hung in a short split curtain shape; and
a length (L) of each of said plurality of strip parts is set to 100 mm or more and 320 mm or less.

9. The X-ray inspection apparatus according to any one of Claims 1 to 8, wherein a color of said X-ray shielding curtain is set to blue.

10. The X-ray inspection apparatus according to any one of Claims 2 and 3, wherein a thickness (T2) of said protective layer (T2) is set to 0.08 mm or more and 0.1 mm or less.

11. The X-ray inspection apparatus according to Claim 1, further comprising:
a suspension member (40) for hanging by which said X-ray shielding curtain is suspended; and
an attachment member (250) for being attached to an upper end part (231a) of said X-ray shielding curtain and including an insertion space (250a) into which said suspension member is inserted,
wherein:
said attachment member is formed of a material through which X-rays pass; and
an upper end (231d) of said tungsten-containing layer enters into an inside of said insertion space.

12. The X-ray inspection apparatus according to Claim 11, wherein said upper end of said tungsten-containing layer is not in contact with said suspension member.

13. The X-ray inspection apparatus according to Claim 1, further comprising:
a suspension member (40) for hanging by which said X-ray shielding curtain is suspended; and
an attachment member (260) for being attached to an upper end part (231 a) of said X-ray shielding curtain and including an insertion space (260a) into which said suspension member is inserted,
wherein said attachment member is formed of a metal material shielding X-rays.

14. The X-ray inspection apparatus according to Claim 13, wherein a lower end part (262b, 263b) of said attachment member includes a curved surface (262c, 263 c) to be convex toward said upper end part of said X-ray shielding curtain, the curved surface being opposed to said upper end part and becoming apart from said upper end part as closer to a tip of said lower end part.

15. The X-ray inspection apparatus according to Claim 13, wherein said attachment member includes a sandwiching portion (262a, 263 a) for sandwiching said upper end part of said X-ray shielding curtain by surface contact.

16. The X-ray inspection apparatus according to Claim 15, wherein said attachment member and said upper end part of said X-ray shielding curtain are configured to be fastened to each other with a bolt at a position above said sandwiching portion.
